# EUROPEAN PATENT APPLICATION

(11) **EP 4 517 952 A1**
(43) Date of publication of application: **05.03.2025**
(21) Application number: 24809532.5
(22) Date of filing: 06.06.2024
(51) Int. Cl.: H01M 50/15

(54) **INSULATING PLATE, COVER PLATE ASSEMBLY, BATTERY, LIQUID INJECTION HEAD AND LIQUID INJECTION APPARATUS**

(30) Priority: 08.06.2023 CN 202321455918 U; 08.06.2023 CN 202310676863
(71) Applicant: Eve Power Co., Ltd., Jingmen, Hubei 448000 (CN)
(72) Inventor: HUANG, Jinhai, Jingmen, Hubei 448000 (CN); SHU, Kuanjin, Jingmen, Hubei 448000 (CN); HE, Xiaowu, Jingmen, Hubei 448000 (CN); AN, Suli, Jingmen, Hubei 448000 (CN); WANG, Junmin, Jingmen, Hubei 448000 (CN); HE, Wei, Jingmen, Hubei 448000 (CN)
(74) Representative: Berggren Oy
(86) International application number: PCT/CN2024/097789
(87) International publication number: WO 2024/251204

(57) **Abstract**

The present application discloses an insulation board, a coverplate assembly, a battery, a liquid injection head, and a liquid injection apparatus. By disposing a sealing structure on a body plate structure, the assembly configuration of the sealing structure can be determined by determining an overall assembly configuration of the insulation board, and an overall thickness of the sealing structure can be smaller. A sealing part can be disposed on a side of the body plate structure near a coverplate main body, thereby reducing overall occupancy of the sealing structure to the internal space of the battery and improving energy density and safety of a battery cell.

## Description

The present application claims priority to Chinese Patent Application No. 202310676863.X, filed with the China National Intellectual Property Administration (CNIPA) on June 8, 2023, and priority to Chinese Patent Application No. 202321455918.6, filed with the CNIPA on June 8, 2023, and the above applications are incorporated by reference in the entirety of the above applications into the present application.

### TECHNICAL FIELD

The present application relates to a field of batteries, especially to an insulation board, a coverplate assembly, a battery, a liquid injection head, and a liquid injection apparatus.

### BACKGROUND

To facilitate the injection of an electrolyte, a coverplate main body of a power battery is usually provided with a liquid injection hole. After the injection is completed, to prevent leakage, it is common in related technologies to seal the liquid injection hole by placing a sealing rubber particle in it. Additionally, to ensure a high level of controllability when inserting the sealing rubber particle into the liquid injection hole, which guarantees the manufacturing yield of the battery, the industry generally requires a thickness of the sealing rubber particle to be no less than 3.5mm. In other words, the thickness of the sealing rubber particle is often greater than the thickness of the coverplate assembly main body.

### SUMMARY

However, such setup can result in the end of the sealing rubber particle entering the interior of the battery after being inserted into the liquid injection hole, thus occupying the space designated for the battery cell inside the battery. This reduces the energy density of the battery cell, causes the battery cell to be compressed, and decreases the safety of the battery.

The present application provides an insulation board. The insulation board is adapted for a coverplate assembly of a battery. The coverplate assembly comprises a coverplate main body and the insulation board. A liquid injection hole is defined in the coverplate main body. The insulation board comprises:
a body plate structure, wherein the body plate structure is disposed on a side of the coverplate main body; and
a sealing structure, wherein the sealing structure comprises a sealing part and a connection part, the sealing part is disposed on a side of the body plate structure near the coverplate main body, the sealing part is configured to seal the liquid injection hole, and the connection part is connected between the sealing part and the body plate structure, the connection part is elastic.

The present application also provides a coverplate assembly. The coverplate assembly is adapted for a battery, and the coverplate assembly comprises:
a coverplate main body, wherein a liquid injection hole is defined in the coverplate main body; and
an insulation board comprising a body plate structure and a sealing structure, wherein the body plate structure is disposed on a side of the coverplate main body, the sealing structure comprises a sealing part and a connection part; the sealing part is disposed on a side of the body plate structure near the coverplate main body, the sealing part is configured to seal the liquid injection hole, the connection part is connected between the sealing part and the body plate structure, the connection part is elastic, the body plate structure is disposed on a side of the coverplate main body, the sealing part is disposed on a side of the body plate structure near the coverplate main body, and the sealing part is able to seal the liquid injection hole.

The present application also provides a battery. The battery comprises a casing, a battery cell and a coverplate assembly, the coverplate assembly comprises a coverplate main body and an insulation board, a liquid injection hole is defined in the coverplate main body; the insulation board comprises a body plate structure and a sealing structure, the body plate structure is disposed on a side of the coverplate main body, the sealing structure comprises a sealing part and a connection part; the sealing part is disposed on a side of the body plate structure near the coverplate main body, the sealing part is configured to seal the liquid injection hole, the connection part is connected between the sealing part and the body plate structure, the connection part is elastic, the body plate structure is disposed on a side of the coverplate main body, the sealing part is disposed on a side of the body plate structure near the coverplate main body, and the sealing part is able to seal the liquid injection hole;
wherein an aperture is defined in a side of the casing, the battery cell is disposed in an internal of the casing, the coverplate assembly covers the aperture, and the coverplate main body is located on a side of the insulation board away from the battery cell.

The present application also provides a liquid injection head. The liquid injection head is configured to inject liquid in an internal of the battery, the battery comprises a casing, a battery cell and a coverplate assembly, the coverplate assembly comprises a coverplate main body and an insulation board, a liquid injection hole is defined in the coverplate main body; the insulation board comprises a body plate structure and a sealing structure, the body plate structure is disposed on a side of the coverplate main body, the sealing structure comprises a sealing part and a connection part; the sealing part is disposed on a side of the body plate structure near the coverplate main body, the sealing part is configured to seal the liquid injection hole, the connection part is connected between the sealing part and the body plate structure, the connection part is elastic, the body plate structure is disposed on a side of the coverplate main body, the sealing part is disposed on a side of the body plate structure near the coverplate main body, and the sealing part is able to seal the liquid injection hole; wherein an aperture is defined in a side of the casing, the battery cell is disposed in an internal of the casing, the coverplate assembly covers the aperture, and the coverplate main body is located on a side of the insulation board away from the battery cell; the liquid injection head comprises:
a main body part, wherein a first channel is defined in the main body part, and the main body part is configured to be sealingly connected to coverplate main body to seal the liquid injection hole; and
an extension portion, wherein the extension portion is protrudingly disposed on the main body part, the extension portion is configured to extend through the liquid injection hole, and a top end of the extension portion is configured to abut the sealing part and enter the internal of the casing, a channel aperture is defined in an outer periphery of the top end, and the channel aperture communicates with the first channel.

The present application also provides a liquid injection apparatus. The liquid injection apparatus comprises an evacuation device, a liquid injection device, and a liquid injection head, the liquid injection head is configured to inject liquid an internal of the battery, the battery comprises a casing, a battery cell and a coverplate assembly, the coverplate assembly comprises a coverplate main body and an insulation board, a liquid injection hole is defined in the coverplate main body; the insulation board comprises a body plate structure and a sealing structure, the body plate structure is disposed on a side of the coverplate main body, the sealing structure comprises a sealing part and a connection part; the sealing part is disposed on a side of the body plate structure near the coverplate main body, the sealing part is configured to seal the liquid injection hole, the connection part is connected between the sealing part and the body plate structure, the connection part is elastic, the body plate structure is disposed on a side of the coverplate main body, the sealing part is disposed on a side of the body plate structure near the coverplate main body, and the sealing part is able to seal the liquid injection hole; wherein an aperture is defined in a side of the casing, the battery cell is disposed in an internal of the casing, the coverplate assembly covers the aperture, and the coverplate main body is located on a side of the insulation board away from the battery cell; the liquid injection head comprises:
a main body part, wherein a first channel is defined in the main body part, and the main body part is configured to be sealingly connected to coverplate main body to seal the liquid injection hole; and
an extension portion, wherein the extension portion is protrudingly disposed on the main body part, the extension portion is configured to extend through the liquid injection hole, and a top end of the extension portion is configured to abut the sealing part and enter the internal of the casing, a channel aperture is defined in an outer periphery of the top end, and the channel aperture communicates with the first channel;
wherein the evacuation device and the liquid injection device are connected to the liquid injection head, and communicate with the first channel.

### Beneficial effect

The insulation board, the coverplate assembly, and the battery provided by the present application, by the sealing structure comprising a sealing part and a connection part connected between the sealing part and the body plate structure, enable the sealing part to seal the liquid injection hole under the support of the elastic connection part, and by disposing the sealing structure on the body plate structure, during assembly, the assembly configuration of the sealing structure can be determined by determining an overall assembly configuration of the insulation board to guarantee an assembly yield of the sealing structure. Therefore, an overall thickness of the sealing structure can be less such that the sealing part can be disposed on a side of the body plate structure near the coverplate main body. By disposing the sealing part on a side of the body plate structure near the coverplate main body, namely, by disposing the sealing part between the body plate structure and the coverplate main body, overall occupancy of the sealing structure to a space of a side of the body plate structure away from the coverplate main body (namely, an internal space of the battery) can be reduced, thus improving the energy density and the safety of the battery cell of the battery including the insulation board.

The liquid injection head and the liquid injection apparatus provided by the present application, by disposing an extension portion able to extend through the liquid injection hole of the sealing part of the insulation board, can utilize a top end of the extension portion to abut the sealing part to unseal the liquid injection hole, and enable the top end to enter a location between the coverplate main body and the body plate structure such that the channel aperture of the outer periphery of the top end communicates with a gap between the coverplate main body and the body plate structure to evacuate and inject liquid in the internal of the battery through the channel aperture of the outer periphery of the top end. Also, during the above evacuation process and liquid injection process, the sealing part would not block the channel aperture to hinder evacuation and liquid injection of the liquid injection head.

### BRIEF DESCRIPTION OF THE DRAWINGS

FIG. 1 is a schematic perspective structural view of an insulation board provided by the present application;
FIG. 2 is an enlarged view of a P portion in FIG. 1;
FIG. 3 is a schematic partial view of an assembly structure of an insulation board and a coverplate main body provided by the present application;
FIG. 4 is a schematic partial view of exploded structures of the insulation board and the coverplate main body provided by the present application;
FIG. 5 is a schematic perspective structural view of the coverplate assembly provided by the present application;
FIG. 6 is a schematic exploded view of a structure of the coverplate assembly provided by the present application;
FIG. 7 is a schematic perspective structural view of a battery provided by the present application;
FIG. 8 is a schematic exploded view of the battery provided by the present application;
FIG. 9 is a schematic perspective structural view of a liquid injection head provided by the present application;
FIG. 10 is a schematic bottom view of the liquid injection head provided by the present application;
FIG. 11 is a schematic cross-sectional view along a line A-A in FIG. 10;
FIG. 12 is a schematic structural view of the liquid injection head, the coverplate main body, and the insulation board provided by the present application (when the liquid injection head is configured to inject liquid in the internal of the battery);
FIG. 13 is a schematic cross-sectional view of a structure of the liquid injection head (the liquid injection head implements liquid injection by simultaneously evacuating and injecting liquid in the internal of the battery) provided by the present application; and
FIG. 14 is a structure schematic diagram of a structure of a liquid injection apparatus provided by the present application.

### Description of reference characters:

1, insulation board; 10, body plate structure; 100, reinforcement rib; 101, first through hole; 102, second through hole; 11, sealing structure; 110, sealing part; 110a, sealing surface; 111, connection part; 111a, thickness reduction portion 111b, width reduction portion 112, alignment part; 112a, guide surface;
2, coverplate assembly; 20, coverplate main body; 200, liquid injection hole;
3, battery; 30, casing; 300, aperture; 31, battery cell;
4, liquid injection head; 40, main body part; 400, first channel; 400a, liquid injection channel; 400b, evacuation channel; 401, sealing ring; 402, disposing slot 41, extension portion; 410, top end; 410a, top surface; 410b, outer periphery surface; 411, channel aperture; 411a, liquid injection aperture; 411b, evacuation aperture; 412, second channel;
5, liquid injection apparatus; 50, evacuation device; 51, liquid injection device.

### DETAILED DESCRIPTION

In the description of the present application, unless specifically defined and restricted otherwise, the terms "connected," "attached," and "fixed" should be broadly understood. For example, the terms can refer to a fixed connection or a detachable connection, or an integral connection; the terms can refer to a mechanical connection or an electrical connection; the terms can refer to direct connection or indirect connection through an intermediary medium. The terms can refer to the internal communication between two elements or the interaction relationship between two elements. A person skilled in the art can understand the specific meaning of the above terms in the context of the present application according to specific circumstances.

In the present application, unless specifically defined and restricted otherwise, the terms "above" or "below" the second feature can include the first feature being in direct contact with the second feature or not being in direct contact but instead being in contact through another feature between them. Furthermore, the terms "above," "upper," and "on top of" the second feature include both the first feature being directly above and obliquely above the second feature, with a horizontal height of the first feature being higher than a horizontal height of the second feature. The terms "below," "lower," and "underneath" the second feature include both the first feature being directly below and obliquely below the second feature, with a horizontal height of the first feature being lower than a horizontal height of the second feature.

In the description of the present embodiment, the terms "top," "bottom," "left," "right," "front," "back," and other directional or positional relationships are based on the directions or positional relationships shown in the drawings, and are used for convenience in description and simplification of operations. The above terms do not indicate or imply that the referenced device or element must have a specific orientation, be constructed, or operated in a specific orientation, and therefore should not be understood as a limitation on the present application. Moreover, the terms "first" and "second" are used for descriptive distinction and do not carry special meanings.

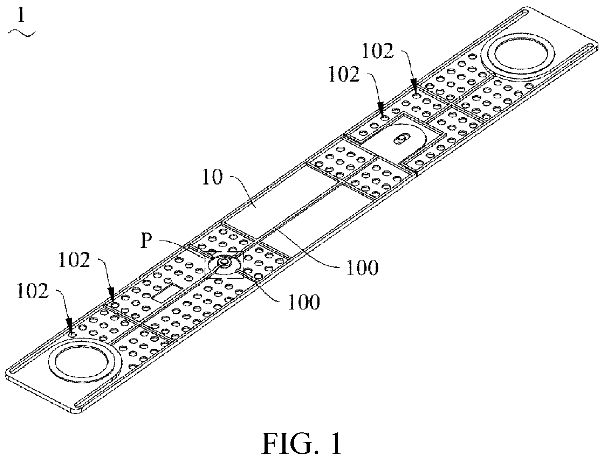

With reference to FIGs. 1, 2, and 3, the present application provides an insulation board 1 and a coverplate assembly adapted for a battery. The coverplate assembly comprises a coverplate main body 20 and the insulation board 1. A liquid injection hole 200 is defined in the coverplate main body 20. The insulation board 1 comprises a body plate structure 10 and a sealing structure 11. The body plate structure 10 is disposed on a side of the coverplate main body 20. The sealing structure 11 comprises a sealing part 110 and a connection part 111. The sealing part 110 is disposed on a side of the body plate structure 10 near the coverplate main body 20. The sealing part 110 is configured to seal the liquid injection hole 200. The connection part 111 is connected between the sealing part 110 and the body plate structure 10. The connection part 111 is elastic.

The sealing structure 11 comprising the sealing part 110 and the connection part 111 connected between the sealing part 110 and the body plate structure 10 enables the sealing part 110 to seal the liquid injection hole 200 under the support of the connection part 111 being elastic. Even the sealing part 110 moves to unseal the liquid injection hole 200 due to an effect of an additional external force, after the additional external force vanishes, the sealing part 110 can be automatically restored to seal the liquid injection hole 200 under an effect of an elastic force of the connection part 111. Namely, the sealing structure 11 can automatically seal the liquid injection hole 200 on a side of the coverplate main body 20 facing the insulation board 1.

By disposing the sealing structure 11 in the body plate structure 10, during assembly, an assembly configuration of the sealing structure 11 can be determined by determining an overall assembly configuration of the insulation board 1. For example, a correct orientation of a side of the insulation board 1 facing the coverplate main body 20 is determined to determine that the sealing structure 11 of the body plate structure 10 is in a correct assembly configuration. Because an overall volume of the insulation board 1 is greater compared to the sealing structure 11, the overall assembly configuration of the insulation board 1 is easily determined and the overall insulation board 1 is easily kept in a correct configuration for assembly, thereby easily guaranteeing an assembly yield of the sealing structure 11. Therefore, an overall thickness of the sealing structure 11 can be less to enable the sealing part 110 to be disposed on a side of the body plate structure 10 near the coverplate main body 20. By disposing the sealing part 110 on a side of the body plate structure 10 near the coverplate main body 20, namely, by disposing the sealing part 110 between the body plate structure 10 and the coverplate main body 20, overall occupancy of the sealing structure 11 to a space of a side of the body plate structure 10 away from the coverplate main body 20 (namely, an internal space of the battery) can be reduced, thereby improving the energy density and the safety of the battery cell of the battery including the insulation board 1.

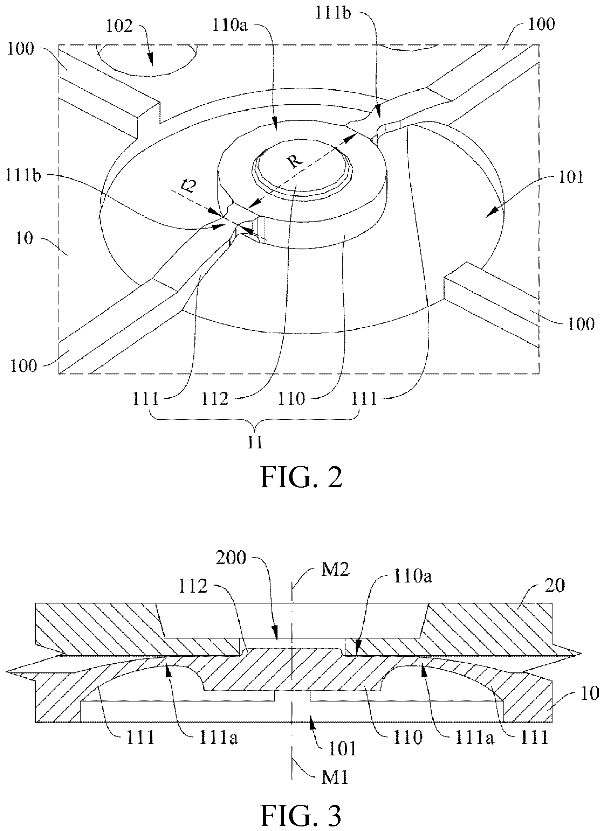

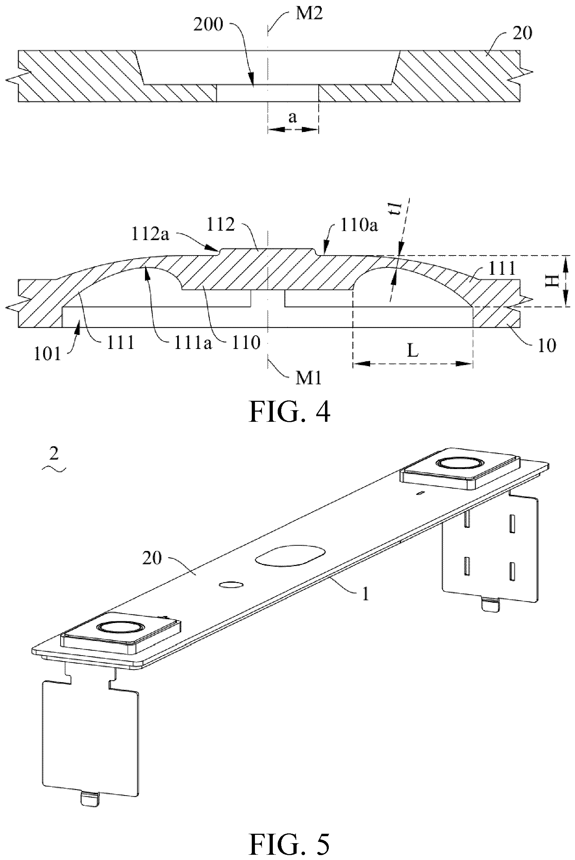

With reference to FIGs. 2, 3, and 4, in some possible embodying ways, a side of the sealing part 110 away from the body plate structure 10 can comprise a sealing surface 110a. The sealing surface 110a is configured to abut the coverplate main body 20 to seal the liquid injection hole 200, thereby implementing the sealing function of the sealing part 110 to the liquid injection hole 200.

In some possible embodying ways, a height of the connection part 111 protruding from the body plate structure 10 is less than or equal to a height of the sealing surface 110a protruding from the body plate structure 10 to prevent interference of the structure of the connection part 111 with the coverplate main body 20 affecting abutment tightness of the sealing surface 110a and the coverplate main body 20, thereby preventing influence of sealing effect of the sealing surface 110a to the liquid injection hole 200.

The inventor discovers upon further research that to have a better sealing effect of the sealing surface 110a to the liquid injection hole 200, a greater effective abutment area between the sealing surface 110a and the coverplate main body 20 is required, namely, an area of the sealing surface 110a is required to be greater than an area of the liquid injection hole 200 defined in the coverplate main body 20, by a certain extent. Furthermore, the greater area of the sealing surface 110a, although resulting in the better sealing effect of the sealing surface 110a to the liquid injection hole 200, also results in the greater volume of the sealing part 110. The greater area of the sealing surface 110a in one aspect influences the compactness of an overall structure of the insulation board 1, and in another aspect requires greater support of the connection part 111 to the sealing part 110, thereby resulting in higher requirement to elastic support capability of the connection part 111. Therefore, an area of the sealing part 110 is required to be greater than an area of the liquid injection hole 200 defined in a side surface of the coverplate main body 20 facing the body plate structure 10 by a certain extent, but the area of the sealing surface 110a should not be too large.

In the related art, the liquid injection hole 200 is usually a circular hole, and a radius of the liquid injection hole 200 defined in the side surface of the coverplate main body 20 facing the body plate structure 10 is a, the radius a usually can be 1.5mm. Accordingly, in some possible embodying ways, the sealing surface 110a comprises an outer circumscribed circle diameter R, and the outer circumscribed circle diameter R can fulfill: 4mm≤R≤8mm, for example, outer circumscribed circle diameter R can be 4mm, 4.5mm, 5mm, 5.5mm, 6mm, 6.5mm, 7mm, 7.5mm, or 8mm.

In another some possible embodiments, an area of the sealing surface 110a can be S1, a hole area of the liquid injection hole 200 on the side surface of the coverplate main body 20 facing the body plate structure 10 can be S2, a ratio of the area S1 to the area S2 can fulfill: 2≤S1/S2≤5, for example, S1/S2 can be : 2, 2.5, 3, 3.5, 4, 4.5, or 5, wherein units of the area S1 and the area S2 are mm2.

As described above, a radius of the liquid injection hole 200 is a, therefore, the area S2 = πa², and 2≤S1/S2≤5 is equal to 2≤S1/(πa²)≤5, wherein a unit of the radius a is mm.

Understandably, for the sealing surface 110a comprising the same outer circumscribed circle diameter R and a different shape, the area S1 of the sealing surface 110a is also different. To make both the sealing capability of the sealing surface 110a and the structure volume of the sealing part 110 more ideal, in some possible embodying ways, the outer circumscribed circle diameter R of the sealing surface 110a can fulfill: 4mm≤R≤8mm while the area S1 of the sealing surface 110a and the area S2 of the hole in the side surface of the coverplate main body 20 facing the body plate structure 10 fulfill: 2≤S1/S2≤5.

In some possible embodiments, the sealing surface 110a can be a circular surface, an equilateral triangular surface, an equilateral quadrilateral surface, an equilateral pentagonal surface, an equilateral hexagonal surface, or another equilateral polygonal surface. Correspondingly, the sealing part 110 can be a cylindrical, triangular prism, quadrilateral prism, pentagonal prism, hexagonal prism, or other prismatic structure. As a result, distribution of the effective abutment area between the sealing surface 110a and the cover plate main body 20 surrounding the liquid injection hole 200 is more uniform, the sealing effect of the sealing surface 110a on the liquid injection hole 200 is more uniform, and the structure of the sealing part 110 is simpler and easier to manufacture.

In some possible embodying ways, the sealing surface 110a can comprise a first axial line M1, and the sealing structure 11 can further comprise an alignment part 112. The alignment part 112 is protrudingly disposed on the sealing surface 110a. The alignment part 112 is configured to extend in an internal of the liquid injection hole 200 such that the first axial line M1 of the sealing surface 110a substantially coincides with a second axial line M2 of the liquid injection hole 200, thereby reducing an offset between the sealing surface 110a and the liquid injection hole 200. As a result, relative locations of the sealing surface 110a and the liquid injection hole 200 are closer to the idea state of the design such that distribution of the effective abutment area of the sealing surface 110a and the coverplate main body 20 surrounding the liquid injection hole 200 is more uniform, and the sealing effect of the sealing surface 110a to the liquid injection hole 200 is more balanced.

In some possible embodying ways, an outer periphery of the alignment part 112 can comprise a guide surface 112a. The guide surface 112a is disposed to guide the alignment part 112 to extend in the liquid injection hole 200 such that in the case that a certain offset occurs between the alignment part 112 and the liquid injection hole 200, the alignment part 112 can be self-aligned with the liquid injection hole 200 through the guide surface 112a to enable the alignment part 112 to extend in the internal of the liquid injection hole 200 and drive the first axial line M1 of the sealing part 110 to be automatically aligned with the second axial line M2 of the liquid injection hole 200.

In particular, in the case that a certain offset occurs between the alignment part 112 and the liquid injection hole 200, the guide surface 112a can abut a hole wall of the liquid injection hole 200 to enable the alignment part 112 to extend in the liquid injection hole 200 under an effect of a reaction force from the hole wall of the liquid injection hole 200.

For example, the alignment part 112 can be a conical frustum structure protrudingly disposed on the sealing surface 110a, and the alignment part 112 utilizes the first axial line M1 as an axis, an outer periphery surface of the conical frustum structure forms a guide surface 112a such that the alignment part 112 can implement a function of driving the sealing part 110 for automatic alignment, and the structure of the alignment part 112 is simple.

In another example, the alignment part 112 can be a ring structure surrounding the first axial line M1. An outer periphery of the ring structure forms the guide surface 112a. Alternatively, the alignment part 112 can be plural, the alignment parts 112 are arranged around the first axial line M1 and spaced from each other. Outer surfaces of the alignment parts 112 away from the first axial line M1 form the guide surface 112a. Understandably, as long as the alignment part 112 can be automatically aligned with and extend in the liquid injection hole 200 to drive the first axial line M1of the sealing part 110 to be automatically aligned with the second axial line M2 of the liquid injection hole 200, the present embodiment has no specific limit to the structure of the alignment part 112.

In some possible embodying ways, the connection part 111 can be connected between an outer periphery of the sealing part 110 and the body plate structure 10 such that along a direction perpendicular to the sealing surface 110a, structures of the connection part 111 and the sealing part 110 are more compact, and the sealing structure 11 is more suitably disposed between the body plate structure 10 and the coverplate main body 20.

In some possible embodying ways, the connection part 111 can be an at least partially bent strip-like structure, two opposite ends of the connection part 111 are connected to the sealing part 110 and the body plate structure 10 respectively. Also, the connection part 111 can be plural. The connection parts 111 are arranged around the sealing part 110 and spaced from each other such that the connection part 111 can provide the sealing part 110 with a greater elastic support force by the at least partially bent structure. Furthermore, increasing a quantity of the connection parts 111 can increase force points of the elastic support force of the connection parts 111 to the sealing part 110, thus improving the balance of a support effect of the connection parts 111 to the sealing part 110 to improve the consistency of abutment tightness of portions of the sealing surface 110a with the coverplate main body 20.

In some possible embodying ways, the connection parts 111 can be arranged equidistantly around the sealing part 110 such that the balance of the support effect of the connection parts 111 to the sealing part 110 is optimal, and the consistency of abutment tightness of portions of the sealing surface 110a with the coverplate main body 20 is also optimal.

In some possible embodying ways, the connection part 111 can be formed as a strip-like structure bent and protruding away from the body plate structure 10 such that the connection part 111 can provide the sealing part 110 with the greater elastic support force while the structure of the connection part 111 becomes simpler.

Along the direction perpendicular to the sealing surface 110a, the connection part 111 comprises a height H. Along a direction parallel to the sealing surface 110a, the connection part 111 comprises a length L. The inventor discovers upon further research that the less a ratio H/L of the height H to the length L of the connection part 111 is, the less an elastic support force can be provided by the connection part 111 for the sealing part 110. The greater the ratio H/L is, the greater the stress is generated on the structure of the connection part 111 during elastic deformation, and the easier the connection part 111 is ruptured. Therefore, the ratio H/L of the height H to the length L of the connection part 111 should be neither too large or too small. Accordingly, in some possible embodying ways, the ratio H/L of the height H to the length L of the connection part 111 can fulfill: 0.2≤H/L≤1.5. For example, H/L can be 0.2, 0.3, 0.4, 0.5, 0.6, 0.7, 0.8, 0.9, 1, 1.1, 1.2, 1.3, 1.4, or 1.5, wherein units of the height H and the length L are mm.

Along the direction perpendicular to the sealing surface 110a, the connection part 111 comprises a thickness. In some possible embodying ways, the connection part 111 can be a structure with an uneven thickness. Namely, the connection part 111 can comprise at least one thickness reduction portion 111a such that when elastic deformation occurs on the connection part 111, the elastic deformation is mainly concentrated on the thickness reduction portion 111a to improve controllability of the elastic deformation of the connection part 111 to better implement simulation calculations to the stress and structure deformation on the connection part 111.

A minimum of a thickness of the connection part 111 can be t1. Namely, a minimum thickness of the thickness reduction portion 111a of the connection part 111 can be t1. The thinner the thickness t1 is, the greater the elastic deformation can occur on the thickness reduction portion 111a. However, the less a structural strength of the thickness reduction portion 111a is, the less an elastic support force can be provided by the connection part 111 for the sealing part 110. The thicker the thickness t1 is, the less the elastic deformation can occur on the thickness reduction portion 111a. The less a concentration function of the thickness reduction portion 111a to the elastic deformation of the connection part 111 is, the lower the controllability of the elastic deformation of the connection part 111 is, however, the greater the elastic support force is provided by the connection part 111 for the sealing part 110. Therefore, the thickness t1 should be neither too thin nor too thick. Accordingly, in some possible embodying ways, the thickness t1 can fulfill: 0.2mm≤t1≤1mm. For example, the thickness t1 can be 0.2mm, 0.3mm, 0.4mm, 0.5mm, 0.6mm, 0.7mm, 0.8mm, 0.9mm, or 1mm.

Along the direction parallel to the sealing surface 110a, the connection part 111 comprises a width. In another some possible embodiments, the connection part 111 can be a structure with an uneven width, namely, the connection part 111 can comprise at least one width reduction portion 111b such that the connection part 111 is easily bent elastically along a width direction on the width reduction portion 111b to enable the sealing part 110 supported by the connection part 111 to slightly twist along a circumference. Thus, under in the case that the sealing part 110 is required to slightly twist due to the manufacturing error to enable the sealing surface 110a to tightly abut the coverplate main body 20, the connection part 111 can be bent along the width direction on the width reduction portion 111b to enable the sealing part 110 to slightly twist such that the sealing surface 110a automatically tightly abuts the coverplate main body 20 to provide the better sealing effect of the sealing surface 110a to the liquid injection hole 200.

A minimum of the width of the connection part 111 can be t2. Namely, the minimum width of the width reduction portion 111b of the connection part 111 can be t2. The narrower the width t2 is, the greater an elastic bending can occur on the width reduction portion 111b, but the less a structural strength of the width reduction portion 111b is, and the less an elastic support force can be provided by the connection part 111 for the sealing part 110. The wider the width t2 is, the less the elastic bending can occur on the width reduction portion 111b, the less an amplitude of the twist can occur on the sealing part 110, the more limited the function of the sealing part 110 automatically adjusting the orientation to enable the sealing surface 110a to tightly abut the coverplate main body 20 is, but the greater the elastic support force can be provided by the connection part 111 for the sealing part 110. Therefore, the width t2 should not be too narrow or too wide. Accordingly, in some possible embodying ways, the width t2 can fulfill: 0.2mm≤t2≤1mm. For example, the width t2 can be 0.2mm, 0.3mm, 0.4mm, 0.5mm, 0.6mm, 0.7mm, 0.8mm, 0.9mm, or 1mm.

In some possible embodying ways, the connection part 111 can be a structure with an uneven thickness and an uneven width. Namely, the connection part 111 can comprise at least one thickness reduction portion 111a and at least one width reduction portion 111b such that the connection part 111 is easily bent elastically along the width direction on the width reduction portion 111b while the controllability of the elastic deformation of the connection part 111 is increased, thereby enabling the sealing surface 110a more easily achieving automatic abutment against the coverplate main body 20 to provide the better sealing effect of the sealing surface 110a to the liquid injection hole 200.

In some possible embodying ways, a minimum of a thickness of the connection part 111 can be t1. Namely, a minimum thickness of thickness reduction portion 111a of the connection part 111 can be t1, the thickness t1 can fulfill: 0.2mm≤t1≤1mm. Also, a minimum of the width of the connection part 111 can be t2. Namely, a minimum width of the width reduction portion 111b of the connection part 111 can be t2, and the width t2 can fulfill: 0.2mm≤t2≤1mm. Effects obtained from values of the thickness t1 and the width t2 can refer to the above-mentioned technical solution, and no repeated elaboration is here.

In some possible embodying ways, the sealing structure 11 and the body plate structure 10 can be formed into one piece, for example, the sealing structure 11 and the body plate structure 10 can be formed integrally. Alternatively, the sealing structure 11 and the body plate structure 10 can be connected together by adhesive, soldered, or securely connected together to form into one piece such that the overall structure of the insulation board 1 is more stable.

Because the body plate structure 10 needs to have an insulation property, the body plate structure 10 is usually plastic with an excellent insulation property. Also, because plastic is usually elastic in a certain extent, in some possible embodying ways, the sealing structure 11 and the body plate structure 10 can be the same plastic material, and the overall insulation board 1 can be formed integrally by an injection molding process. Namely, the sealing structure 11 and the body plate structure 10 can be formed into one piece the injection molding process, thereby simplifying the manufacturing process of the insulation board 1 and enhancing the connection stability of the sealing structure 11 and the body plate structure 10.

With reference to FIGs. 1, 2, and 3 again, in some possible embodying ways, a reinforcement rib 100 can be protrudingly disposed on a surface of the body plate structure 10 to enhance the structural strength of the body plate structure 10.

Understandably, a portion of the body plate structure 10 disposed with the protruding reinforcement rib 100, compared to a portion of the body plate structure 10 without the protruding reinforcement rib 100, comprises an overall structure with a thicker thickness. Therefore, during the injection molding process, the injection molding material of the portion of the body plate structure 10 disposed with the protruding reinforcement rib 100 cools down more slowly, and the solidification of the injection molding material is more time consuming. Accordingly, in some possible embodying ways, the connection part 111 can be connected between the sealing part 110 and the reinforcement rib 100 such that during the injection molding process, injection molding material can enter the connection part 111 from the reinforcement rib 100 to form the structures of the connection part 111 and the sealing part 110. The temperature of the injection molding material entering the connection part 111 is higher and can reduce an issue of insufficient material flow caused by the injection molding material prematurely cooling and solidifying to lead to defects in the sealing structure 11 due to material shortage, thereby improving the yield rate of the injection molding process of the sealing structure 11.

In some possible embodying ways, a first through hole 101 can be defined in the body plate structure 10. The first through hole 101 is configured to correspond to the liquid injection hole 200. The sealing structure 11 can be disposed in the first through hole 101, thereby facilitating an electrolyte quickly entering the internal of the battery through the first through hole 101 when the liquid injection head injects liquid in the internal of the battery (namely, a side of the body plate structure 10 away from the coverplate main body 20) from the liquid injection hole 200.

In some possible embodying ways, a plurality of second through holes 102, arranged in an array, can be defined in the body plate structure 10, thereby facilitating the electrolyte seeping into the internal of the battery through the second through holes 102 when the liquid injection head injects liquid in the internal of the battery (namely, the side of the body plate structure 10 away from the coverplate main body 20) from the liquid injection hole 200,.

In some possible embodying ways, the body plate structure 10 can be formed with both the first through hole 101 and the second through holes 102 as described above such that 101 the electrolyte quickly enters the internal of the battery through the first through hole, and the electrolyte, not entering the first through hole 101, seeps into the internal of the battery through the second through holes 102, thereby improving the liquid injection efficiency of the electrolyte.

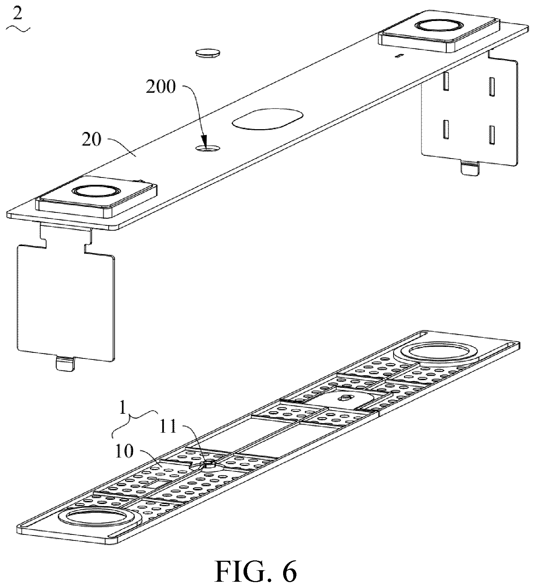

With reference to FIGs. 3, 5, and 6, the present application provides a coverplate assembly 2 adapted for a battery. the coverplate assembly 2 comprises a coverplate main body 20 and the insulation board 1 provided by the above technical solution. A liquid injection hole 200 is defined in the coverplate main body 20. The body plate structure 10 is disposed on a side of the coverplate main body 20. The sealing part 110 is disposed on a side of the body plate structure 10 near the coverplate main body 20, and the sealing part 110 can seal the liquid injection hole 200. Because the sealing part 110 is located between the body plate structure 10 and the coverplate main body 20, the sealing structure 11 overall occupies little of a space on a side of the body plate structure 10 away from the coverplate main body 20 (namely, the internal space of the battery), thereby able to improve the energy density and safety of the battery cell of the battery including the coverplate assembly 2.

In some possible embodying ways, an interval distance is defined between the coverplate main body 20 and the body plate structure 10. The interval distance is less than a protruding height of the sealing surface 110a protruding from the body plate structure 10 such that the sealing structure 11 is overall tightly pressed between the body plate structure 10 and the coverplate main body 20 when the body plate structure 10 is disposed on a side of the coverplate main body 20. Namely, the sealing surface 110a is enabled to tightly abut a surface of the coverplate main body 20. Also, the connection part 111 is squeezed to generate certain elastic deformation to continuously apply an elastic force to the sealing part 110 such that the sealing surface 110a is tightly pressed on the surface of the coverplate main body 20 more stably to better stabilize the sealing effect of the sealing surface 110a to the liquid injection hole 200.

Understandably, the less the interval distance is between the coverplate main body 20 and the body plate structure 10, the greater the pressing force with which the sealing surface 110a abuts and is tightly pressed against the surface of the coverplate main body 20, leading to a more stable sealing effect of the liquid injection hole 200. However, the interval distance between the coverplate main body 20 and the body plate structure 10 is for the liquid injection head entering the interval distance to implement liquid injection. The less the space of the evacuation operation is, the greater the interval distance is between the coverplate main body 20 and the body plate structure 10, and the less the pressing force with which the sealing surface 110a abuts and is pressed against the surface of the coverplate main body 20, leading to difficulty maintaining the stability of the sealing effect of the liquid injection hole 200. However, the interval distance between the coverplate main body 20 and the body plate structure 10 is for the liquid injection head entering the interval distance to implement liquid injection. The greater the space of the evacuation operation is, the less a specific interval distance is between the coverplate main body 20 and the body plate structure 10. Selection can be made according to usage requirements, and the present embodiment imposes no specific limitations.

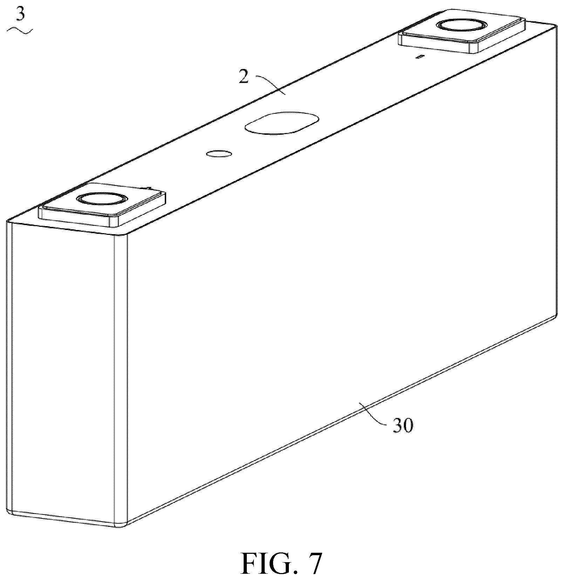

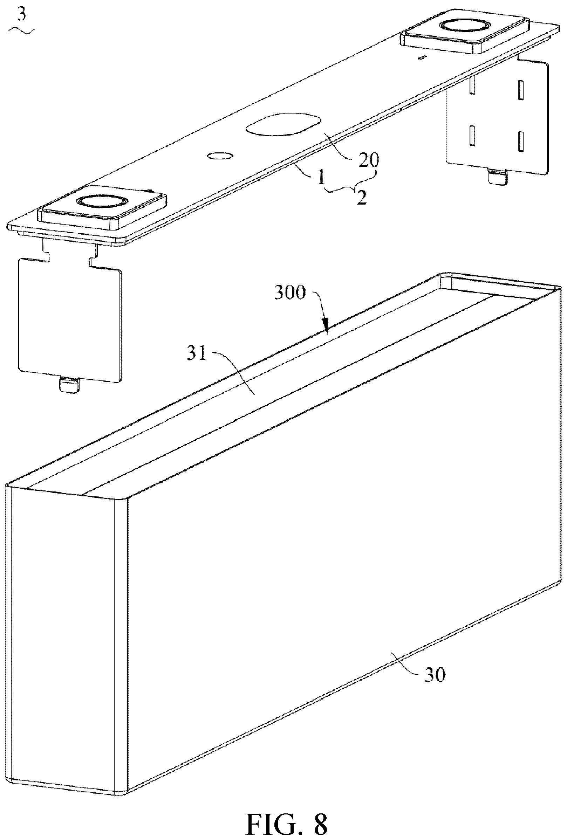

With reference to FIGs. 7 and 8, the present application provides a battery 3, the battery 3 comprises a casing 30, a battery cell 31, and the coverplate assembly 2 provided by the above technical solution. A side of the casing 30 comprises an aperture 300. The battery cell 31 is disposed in an internal of the casing 30. The coverplate assembly 2 covers the aperture 300, and the coverplate main body 20 is located on a side of the insulation board 1 away from the battery cell 31. Because the sealing part 110 (with reference to FIG. 3) occupies little of the internal space of the battery 3, the energy density of the battery cell 31 of the battery 3 is greater, and the use safety of the battery 3 is higher.

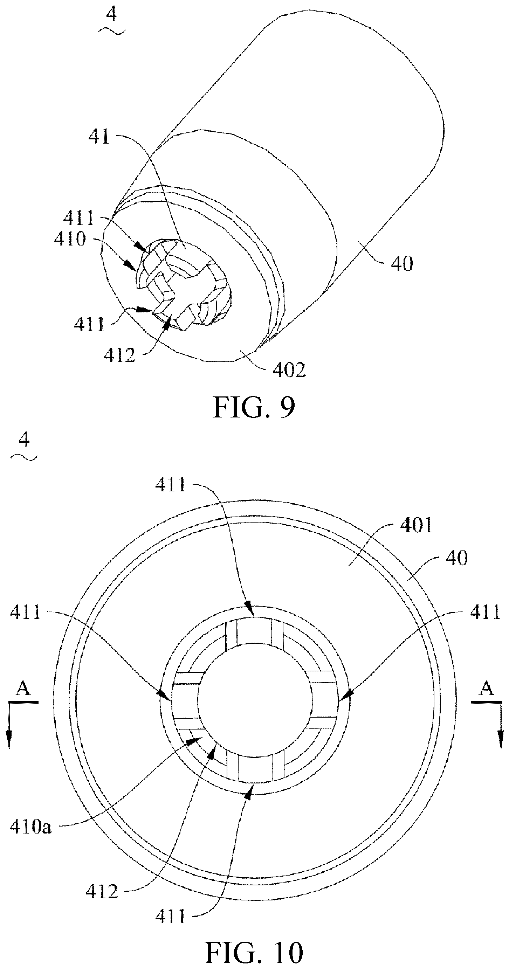

With reference to FIGs. 9, 10, 11, and 12, the present application provides a liquid injection head 4, the liquid injection head 4 is configured to inject liquid in the internal of the battery 3 provided by the above technical solution. The liquid injection head 4 comprises a main body part 40 and an extension portion 41. A first channel 400 is defined in the main body part 40. The main body part 40 is configured to be sealingly connected to the coverplate main body 20 to seal the liquid injection hole 200. The extension portion 41 is protrudingly disposed on the main body part 40, and the extension portion 41 is configured to extend through the liquid injection hole 200. A top end 410 of the extension portion 41 is configured to abut the sealing part 110 and enter the internal of the casing 30. A channel aperture 411 is defined in an outer periphery of the top end 410, and the channel aperture 411 communicates with the first channel 400.

By disposing the extension portion 41 able to extend through the liquid injection hole 200, the top end 410 of the extension portion 41 can be used to abut the sealing part 110 to unseal the liquid injection hole 200 and enable the top end 410 to enter a location between the coverplate main body 20 and the body plate structure 10 such that the channel aperture 411 of the outer periphery of the top end 410 communicates with the gap between the coverplate main body 20 and the body plate structure 10 to implement evacuation and liquid injection to an internal of the battery 3 by the channel aperture 411. During the process, the sealing part 110 would not obstruct the channel aperture 411 to hinder evacuation and liquid injection of the liquid injection head 4.

As described above, when the alignment part 112 is protrudingly disposed on the sealing part 110, the extension portion 41 can also abut the alignment part 112, thereby enabling the alignment part 112 to drive the sealing part 110 to move to unseal the liquid injection hole 200.

A protruding height of the extension portion 41 protruding from the main body part 40 is c. To make the channel aperture 411 defined in the outer periphery of the top end 410 entering a location between the coverplate main body 20 and the body plate structure 10 to communicate with the gap between the coverplate main body 20 and the body plate structure 10, the protruding height c is required to be greater. However, when too large, the protruding height c easily results in a condition of the top end 410 of the extension portion 41 abutting the sealing part 110 to interfere with the battery cell 3 during the liquid injection process to lead to damage to the battery cell 31. Accordingly, in some possible embodying ways, the height c can fulfill: 0.5mm≤c≤1mm, for example, height c can be 0.5mm, 0.6mm, 0.7mm, 0.8mm, 0.9mm, or 1mm.

In some possible embodying ways, the top end 410 can comprise a top surface 410a away from the main body part 40. The top surface 410a is configured to abut the sealing part 110 and enter the internal of the battery 3. A second channel 412 can be defined in the top surface 410a. The second channel 412 communicates with the first channel 400. the channel aperture 411 is defined in an outer periphery and the top surface 410a of the top end 410, and the channel aperture 411 communicates with the second channel 412. As a result, during the manufacturing process of the liquid injection head 4, the extension portion 41 can be processed on a side of the top surface 410a to form the channel aperture 411 communicating with the second channel 412, the forming process of the channel aperture 411 is simpler. Especially, when the channel aperture 411 is plural, a plurality of channel apertures 411 with different aperture directions can be manufactured and obtained without changing a processing direction, thereby simplifying process steps.

Furthermore, defining the channel aperture 411 in the outer periphery and the top surface 410a of the top end 410 makes no space between the channel aperture 411 and the sealing part 110 when the top surface 410a abuts the sealing part 110 such that bubble formation is less like to occur between the channel aperture 411 and the sealing part 110 during the liquid injection process.

According to actual demands of usage and design, in some possible embodying ways, the outer periphery of the top end 410 can comprise an outer periphery surface 410b connected to the top surface 410a. The channel aperture 411 is disposed on the outer periphery surface 410b. The outer periphery surface 410b can be perpendicular to or inclined to the top surface 410a. Alternatively, the outer periphery surface 410b can also be an arc surface or an irregular surface.

In the related art, based on the operational mode of the liquid injection head 4, there are generally two types of liquid injection heads 4. One type is a liquid injection head 4 that achieves breathing-type liquid injection by alternately performing evacuation and liquid injection within the battery 3. The other type is a liquid injection head 4 that performs both evacuation and liquid injection simultaneously within the battery 3 to achieve liquid injection. Next, with reference to the accompanying drawings, the specific structure of the liquid injection head 4 provided in the present embodiment will be described when the liquid injection head 4 provided in the present embodiment is one of these two types of liquid injection heads 4.

With reference to FIGs. 10, 11, and 12, in some possible embodying ways, the liquid injection head 4 is configured to implement a breathing-type liquid injection to the internal of the battery 3. During the evacuation process of the liquid injection head 4, the channel aperture 411 of the liquid injection head 4 serves as an air extraction port, and the first channel 400 of the liquid injection head 4 serves as an evacuation channel. During the liquid injection process of the liquid injection head 4, the channel aperture 411 of the liquid injection head 4 serves as a liquid injection port, and the first channel 400 of the liquid injection head 4 serves as a liquid injection channel.

In some possible embodying ways, the channel aperture 411 can be plural, the channel apertures 411 are arranged along a circumference of the top end 410 and spaced from each other. The channel apertures 411 communicate with the first channel 400 such that increasing a quantity of the channel apertures 411 increases a total aperture area of the channel apertures 411, thereby lowering a flow rate of fluid in the channel apertures 411 during the evacuation process and liquid injection process to further reduce the influence of the airflow and injected electrolyte to the internal of the battery 3.

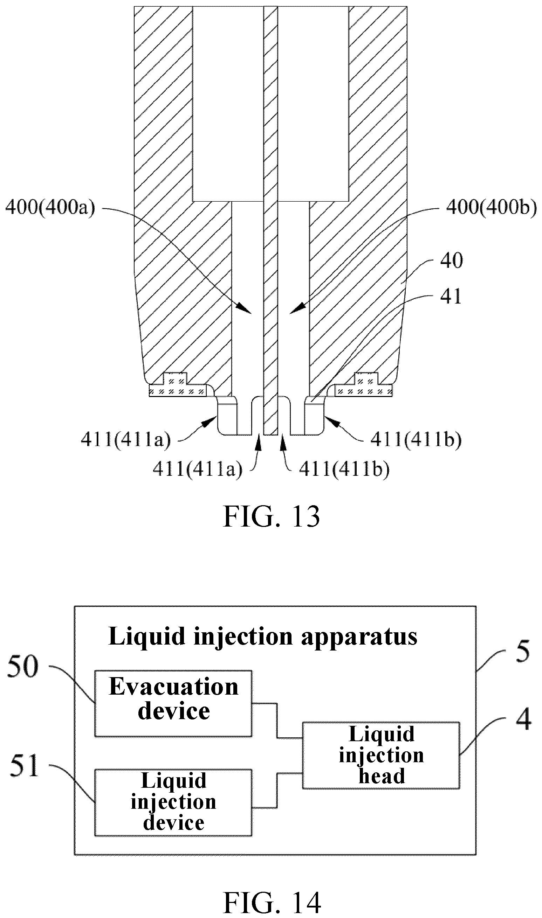

With reference to FIG. 13, in some possible embodying ways, the liquid injection head 4 implements liquid injection by simultaneously evacuating and injecting liquid in the internal of the battery 3. The first channel 400 can be plural, and the first channels 400 are spaced from each other. In the first channels 400. At least one of the first channels 400 is a liquid injection channel 400a, and at least one of remains of the first channels 400 is an evacuation channel 400b. The channel aperture 411 can also be plural, and the channel apertures 411 are spaced from each other. In the channel apertures 411, at least one of the channel apertures 411 is a liquid injection aperture 411a, and at least one of remains of the channel apertures 411 is an evacuation aperture 411b. The liquid injection aperture 411a communicates with the liquid injection channel 400a, and the evacuation aperture 411b communicates with the evacuation channel 400b such that the liquid injection head 4 can evacuate the internal of the battery 3 by the evacuation channel 400b and the evacuation aperture 411b while liquid injection the internal of the battery 3 by the liquid injection channel 400a and the liquid injection aperture 411a to maintain an air pressure of the internal of the battery 3 within a more stable range during liquid injection.

In some possible embodying ways, the liquid injection apertures 411a can communicate with the same liquid injection channel 400a to lower a flow rate of the electrolyte injected into the liquid injection apertures 411a during the liquid injection process to lower the influence to the internal of the battery 3 due to the impact of the electrolyte to the internal of the battery 3.

In some possible embodying ways, the evacuation aperture 411b can communicate with the same evacuation channel 400b to lower an airflow rate of the evacuation aperture 411b to further reduce the influence of an airflow to the internal of the battery 3 during the evacuation process.

In some possible embodying ways, a sealing ring 401 can also be defined in the main body part 40. The sealing ring 401 is located on a side of the main body part 40 disposed with the protruding extension portion 41, and surrounds an outer periphery of the extension portion 41. The main body part 40 sealingly abuts the coverplate main body 20 through the sealing ring 401 to have a better sealing effect to the liquid injection hole 200 to further better prevent air leakage between the main body part 40 and the coverplate main body 20 during the evacuation process and liquid leakage between the main body part 40 and the coverplate main body 20 during the liquid injection process.

In some possible embodying ways, a disposing slot 402 can be defined in a surface of the main body part 40 and surround the extension portion 41. The sealing ring 401 is partially located in the disposing slot 402 and is connected to a slot wall of the disposing slot 402 such that an effective connection area of the sealing ring 401 and the main body part 40 is greater and connection robustness of the sealing ring 401 and the main body part 40 is better.

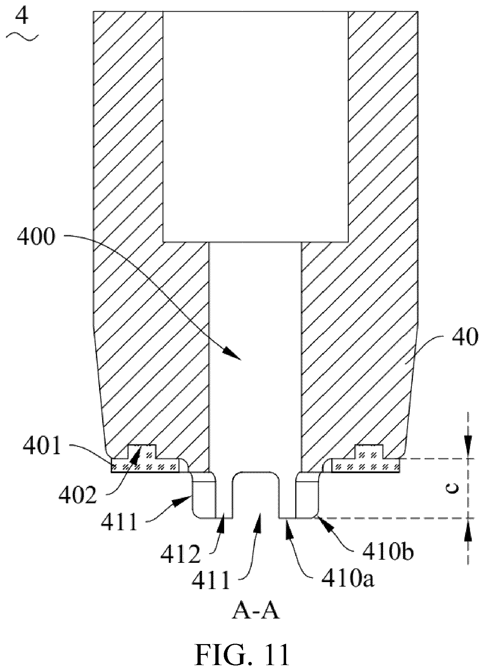

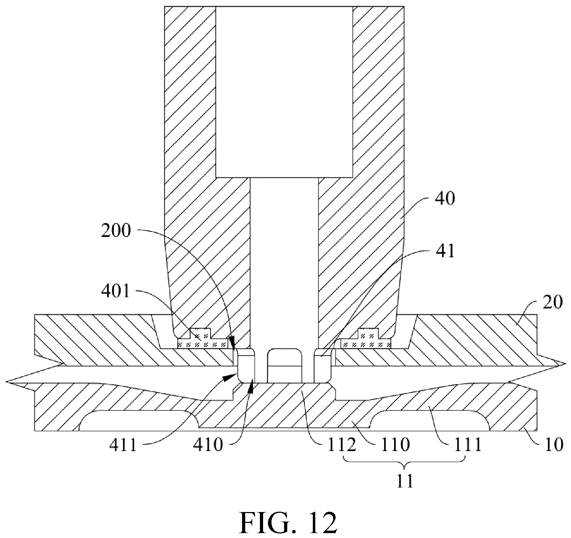

With reference to FIG. 14, the present application provides a liquid injection apparatus 5. The liquid injection apparatus 5 comprises an evacuation device 50, a liquid injection device 51 and the liquid injection head 4 provided by the above technical solution. The evacuation device 50 and liquid injection device 51 are connected to the liquid injection head 4, and are connected to the first channel 400(with reference to FIG. 11). By disposing the above liquid injection head 4, liquid can be injected in the internal of the battery 3 provided by the above technical solution, and the liquid injection process is slightly obstructed by the sealing structure 11(with reference to FIG. 12).

## Claims

1. An insulation board (1), adapted for a coverplate assembly (2) of a battery (3), wherein the coverplate assembly (2) comprises a coverplate main body (20) and the insulation board (1), a liquid injection hole (200) is defined in the coverplate main body (20), and the insulation board (1) comprises:
a body plate structure (10), wherein the body plate structure (10) is disposed on a side of the coverplate main body (20); and
a sealing structure (11), wherein the sealing structure (11) comprises a sealing part (110) and a connection part (111), the sealing part (110) is disposed on a side of the body plate structure (10) near the coverplate main body (20), the sealing part (110) is configured to seal the liquid injection hole (200), and the connection part (111) is connected between the sealing part (110) and the body plate structure (10), the connection part (111) is elastic.

2. The insulation board (1) according to claim 1, wherein a side of the sealing part (110) away from the body plate structure (10) comprises a sealing surface (110a), and the sealing surface (110a) is configured to abut the coverplate main body (20) to seal the liquid injection hole (200); and
a height of the connection part (111) protruding from the body plate structure (10) is less than or equal to a height of the sealing surface (110a) protruding from the body plate structure (10).

3. The insulation board (1) according to claim 2, wherein the sealing surface (110a) comprises an outer circumscribed circle diameter R, 4mm≤R≤8mm, and/or, an area of the sealing surface (110a) is S1, a radius of the liquid injection hole (200) is a, 2≤S1/ (πa²) ≤5, wherein a unit of the area S1 is mm2, and a unit of the radius a is mm.

4. The insulation board (1) according to claim 2, wherein the sealing surface (110a) comprises a first axial line (M1), the sealing structure (11) further comprises an alignment part (112), the alignment part (112) is protrudingly disposed on the sealing surface (110a), the alignment part (112) is configured to extend in an internal of the liquid injection hole (200) such that the first axial line of the sealing surface (110a) coincides with a second axial line of the liquid injection hole (200).

5. The insulation board (1) according to claim 4, wherein an outer periphery of the alignment part (112) comprises a guide surface (112a), and the guide surface (112a) is disposed to guide the alignment part (112) to extend in the liquid injection hole (200).

6. The insulation board (1) according to claim 5, wherein the alignment part (112) is a conical frustum structure, the alignment part uses the first axial line (M1) as an axis, and an outer periphery surface of the conical frustum structure forms the guide surface (112a).

7. The insulation board (1) according to claim 2, wherein the connection part (111) is a at least partially bent strip-like structure, two opposite ends of the connection part (111) are connected to the sealing part (110) and the body plate structure (10) respectively, the connection part (111) is plural, and the connection parts (111) are arranged around the sealing part (110) and are spaced from each other.

8. The insulation board (1) according to claim 7, wherein the connection part (111) forms a strip-like structure bent and protruding away from the body plate structure (10), along a direction perpendicular to the sealing surface (110a), the connection part (111) comprises a height H, and along a direction parallel to the sealing surface (110a), the connection part (111) comprises a length L, 0.2≤H/L≤1.5.

9. The insulation board (1) according to claim 7, wherein along a direction perpendicular to the sealing surface (110a), the connection part (111) comprises a thickness, the connection part (111) is a structure with an uneven thickness; and/or,
along a direction parallel to the sealing surface (110a) the connection part (111) comprises a width, and the connection part (111) is a structure with an uneven width.

10. The insulation board (1) according to claim 9, wherein when the connection part (111) is the structure with the uneven thickness, a minimum of the thickness is t1, 0.2mm≤t1≤1mm; and/or
when the connection part (111) is a structure with an uneven width, a minimum of the width is t2, 0.2mm≤t2≤1mm.

11. The insulation board (1) according to any one of claims 1-10, wherein a reinforcement rib (100) is protrudingly disposed on a surface of the body plate structure (10), and the connection part (111) is connected between the sealing part (110) and the reinforcement rib (100).

12. The insulation board (1) according to any one of claims 1-10, wherein a first through hole (101) is defined in the body plate structure (10), the first through hole (101) is configured to correspond to the liquid injection hole (200), and the sealing structure (11) is disposed in the first through hole (101).

13. A coverplate assembly (2), adapted for a battery (3), and the coverplate assembly (2) comprising:
a coverplate main body (20), wherein a liquid injection hole (200) is defined in the coverplate main body (20); and
the insulation board (1) according to any one of claims 1-12, wherein the body plate structure (10) is disposed on a side of the coverplate main body (20), the sealing part (110) is disposed on a side of the body plate structure (10) near the coverplate main body (20), and the sealing part (110) is able to seal the liquid injection hole (200).

14. A battery (3), wherein the battery (3) comprises a casing (30), a battery cell (31), and the coverplate assembly (2) according to claim 12, an aperture (300) is defined in a side of the casing (30), the battery cell (31) is disposed on an internal of the casing (30), the coverplate assembly (2) covers the aperture (300), and the coverplate main body (20) is located on a side of the insulation board (1) away from the battery cell (31).

15. A liquid injection head (4), wherein the liquid injection head (4) is configured to inject liquid in an internal of the battery (3) according to claim 13, and the liquid injection head (4) comprises:
a main body part (40), wherein a first channel (400) is defined in the main body part (40), and the main body part (40) is configured to be sealingly connected to the coverplate main body (20) to seal the liquid injection hole (200); and
an extension portion (41), wherein the extension portion (41) is protrudingly disposed on the main body part (40), and the extension portion (41) is configured to extend through the liquid injection hole (200), a top end (410) of the extension portion (41) is configured to abut the sealing part (110) and enter the internal of the casing (30), a channel aperture (411) (300) is defined in an outer periphery of the top end (410), and the channel aperture (411) (300) communicates with the first channel (400).

16. The liquid injection head (4) according to claim 15, wherein a protruding height of the extension portion (41) protruding from the main body part (40) is c, 0.5mm≤c≤1mm.

17. The liquid injection head (4) according to claim 15, wherein the top end (410) comprises a top surface (410a) away from the main body part (40), and the top surface (410a) is configured to abut the sealing part (110) and enter the internal of the battery (3); and
a second channel (412) is defined in the top surface (410a), the second channel (412) communicates with the first channel (400), the channel aperture (411) (300) is defined in the outer periphery of the top end (410) and the top surface (410a), and the channel aperture (411) (300) communicates with the second channel (412).

18. The liquid injection head (4) according to any one of claims 15-17, wherein the channel aperture (411) (300) is plural, the channel apertures (411) (300) are spaced from each other along the outer periphery of the top end (410), and the channel apertures (411) (300) communicate with the first channel (400).

19. The liquid injection head (4) according to any one of claims 15-17, wherein the first channel (400) is plural, the first channels (400) are spaced from each other, in the first channels (400), at least one of the first channels (400) is a liquid injection channel (400a), and at least one of remains of the first channels (400) is an evacuation channel (400b); and
the channel aperture (411) (300) is plural, the channel apertures (411) (300) are spaced from each other, in the channel apertures (411) (300), at least one of the channel apertures (411) (300) is a liquid injection aperture (411a) (300), at least one of remains of the channel apertures (411) (300) is an evacuation aperture (411b) (300), the liquid injection aperture (411a) (300) communicates with the liquid injection channel (400a), and the evacuation aperture (411b) (300) communicates with the evacuation channel (400b).

20. A liquid injection apparatus (5), the liquid injection apparatus (5) comprises an evacuation device (50), a liquid injection device (51) and the liquid injection head (4) according to any one of claims 15-19, and the evacuation device (50) and the liquid injection device (51) are connected to the liquid injection head (4) and communicate with the first channel (400).
